# DEMANDE DE BREVET EUROPEEN

(11) **EP 1 255 152 A2**
(43) Date de publication de la demande: **06.11.2002**
(21) Numéro de dépôt: 02290548.3
(22) Date de dépôt: 06.03.2002
(51) Int. Cl.: G02B 27/22

(54) **Boîte transformable en visionneuse stéréoscopique**

(30) Priorité: 06.03.2001 FR 0103000
(71) Demandeur: Push-Tac, 75016 Paris (FR)
(72) Inventeur: Thillard, Dominique, 75016 Paris (FR)
(74) Mandataire: Lavialle, Bruno

(57) **Abrégé**

L'invention concerne une boîte transformable ayant une paroi frontale et des parois adjacentes à la paroi frontale, certaines au moins de ces parois comportant des prédécoupes délimitant des éléments de paroi partiellement ou totalement détachables. Selon l'invention, la paroi frontale (2) comporte un élément détachable (5) permettant, après détachement, une vision binoculaire à l'intérieur de la boîte, l'une des parois adjacentes (3) à la paroi frontale comportant un élément détachable (7) permettant, après détachement, un accès pour la lumière environnante à l'intérieur de la boîte, un moyen de support étant en outre agencé à l'intérieur de la boîte à distance de la paroi frontale (2) pour supporter une image double en regard de ladite la paroi frontale à distance de celle-ci.

## Description

L'invention concerne une boîte transformable en visionneuse stéréoscopique. L'invention concerne notamment mais pas exclusivement des boîtes en carton utilisées pour le conditionnement alimentaire.

On connaît, par exemple du document FR-A-2789769, des visionneuses stéréoscopiques formées par un flan prédécoupé définissant une structure pliable, cette structure comprenant une paroi d'appui pour une image double et une paroi de vision binoculaire en regard de la paroi d'appui, les deux parois étant reliées par des liens pliables de sorte que la visionneuse est stockable à plat. Un tel flan est d'un usage très spécifique, et ne peut en aucun cas servir à une autre application.

Considérant d'une part l'énorme quantité de boîtes en carton produites, le plus souvent jetées une fois vidées de leur contenu, et d'autre part l'attrait ludique qu'offrent les dispositifs stéréoscopiques, il paraît intéressant d'un point de vue économique et publicitaire d'offrir la possibilité de transformer de façon simple une telle boîte en une visionneuse stéréoscopique, la transformation ne devant faire appel à aucun outil ni moyen de liaison de type colle ou agrafes.

A cet effet, on prévoit une boîte transformable ayant une paroi frontale et des parois adjacentes à la paroi frontale, certaines au moins de ces parois comportant des prédécoupes délimitant des éléments de paroi partiellement ou totalement détachables. Selon l'invention, la paroi frontale comporte au moins un élément détachable permettant, après détachement, une vision binoculaire à l'intérieur de la boîte, et au moins l'une des parois adjacentes à la paroi frontale comporte au moins un élément détachable permettant, après détachement, un accès pour la lumière environnante à l'intérieur de la boîte, un moyen de support étant en outre agencé à l'intérieur de la boîte à distance de la paroi frontale pour supporter une image double en regard de la paroi frontale à distance de celle-ci.

Ainsi, lorsque les éléments détachables ne sont pas détachés, la boîte assure sa fonction première de contenant, et lorsque les éléments détachables sont détachés, la boîte est transformée en une visionneuse qui, en rapportant une loupe binoculaire sur la première paroi, permet la vision stéréoscopique d'une image double disposée sur ou contre le moyen de support.

De préférence, l'élément détachable de la première paroi comporte deux portions distantes d'un écartement oculaire. On peut ainsi adapter de façon adéquate une loupe binoculaire présentant deux lentilles circulaires.

De préférence encore, la paroi frontale comporte deux prédécoupes réalisées de part et d'autre de l'élément détachable de la paroi frontale, ces prédécoupes formant, après détachement, des fentes pour la mise en place d'une optique binoculaire.

Selon un premier mode de réalisation, une paroi adjacente à la paroi frontale comporte un élément détachable ayant une ligne de pliage s'étendant le long d'une paroi arrière de la boîte en regard de la paroi frontale, la paroi arrière constituant, après détachement, le moyen de support de l'image double.

Ainsi, l'élément détachable permet tout à la fois l'accès à la paroi arrière servant de support à l'image double et l'accès à la lumière environnante vers ladite paroi arrière. L'élément détachable peut alors être laissé dans une position parallèle à la face arrière pour aider au support de l'image double.

Avantageusement alors, la paroi adjacente à la paroi frontale comprend en outre deux prédécoupes s'étendant de part et d'autre de l'élément détachable le long de la paroi arrière au voisinage de celle-ci, ces prédécoupes constituant après détachement un système de glissière apte à recevoir l'image double.

Ce système de glissière facilite la mise en place de l'image double et stabilise celle-ci contre la paroi arrière.

Selon un deuxième mode de réalisation de l'invention, une paroi adjacente à la paroi frontale comporte un élément détachable délimité par une prédécoupe dont une portion arrière s'étend le long d'une paroi arrière de la boîte en regard de la paroi frontale, la paroi arrière constituant, après détachement de la prédécoupe, le moyen de support de l'image double.

De préférence alors, l'élément détachable est composé de deux volets s'étendant jusqu'à la paroi arrière et ayant chacun une ligne de pliage s'étendant perpendiculairement à la paroi arrière, les volets en position rabattue dans la boîte et la face arrière définissant après détachement un système de glissière apte à recevoir l'image double.

Selon une variante de réalisation, des encoches s'étendent parallèlement à la paroi frontale à cheval sur les lignes de pliage de chacun des volets pour constituer, après détachement, le moyen de support de l'image double lorsque les volets sont rabattus.

On peut alors positionner l'image double à une distance de la paroi frontale qui est inférieure à la distance entre la paroi frontale et la paroi arrière, en vue de positionner l'image double à une distance sensiblement égale à la distance focale de la loupe binoculaire rapportée sur la paroi frontale.

Selon un troisième mode de réalisation, une paroi adjacente à la paroi frontale comporte un premier élément détachable délimité par une prédécoupe dont une portion arrière s'étend parallèlement à la paroi frontale pour définir un bord d'appui après détachement du premier élément détachable, la même paroi adjacente comportant en outre un second élément détachable s'étendant jusqu'au bord d'appui et ayant une ligne de pliage perpendiculaire à ce bord d'appui, le bord d'appui et le second élément en position rabattue autour de la ligne de pliage constituant, après détachement, le moyen de support de l'image double.

Le moyen de support peut là encore être positionné à une distance arbitraire de la paroi frontale, inférieure à la distance délimitée entre la paroi frontale et la paroi arrière de la boîte.

Avantageusement alors, le premier élément détachable est composé de deux volets s'étendant jusqu'au moyen de support et ayant chacun une ligne de pliage s'étendant perpendiculairement au bord libre, les volets en position rabattue dans la boîte et le bord libre définissant, après détachement, un système de glissière apte à recevoir l'image double.

D'autres caractéristiques et avantages de l'invention apparaîtront plus clairement à la lumière de la description qui suit de modes de réalisation particuliers non limitatifs de l'invention. Il sera fait référence aux dessins annexés et aux figures parmi lesquelles :
- la figure 1 est une vue en perspective d'une première boîte selon l'invention ;
- la figure 2 est une vue en perspective de la première boîte selon l'invention, transformée en visionneuse stéréoscopique ;
- la figure 3 est une vue en perspective d'une deuxième boîte selon l'invention ;
- la figure 4 est une vue en perspective de la deuxième boîte selon l'invention, transformée en visionneuse stéréoscopique ;
- la figure 5 est une vue en perspective d'une variante de réalisation de la boîte précédente ;
- la figure 6 est une vue en perspective d'une troisième boîte selon l'invention, transformée en visionneuse stéréoscopique ;
- la figure 7 est une vue de face d'une loupe binoculaire adaptable aux boîtes précédentes ;
- la figure 8 est une vue en coupe partielle d'une boîte selon l'invention ainsi que de la loupe en cours d'installation sur la boîte.

Il convient avant toutes choses de noter que les termes de direction inférieure, supérieure, horizontale, verticale, avant, arrière, utilisés ici font tous référence à un sens d'utilisation de la boîte comme visionneuse tel que représenté sur les figures, sans que les termes utilisés désignent des parois préférées ou particulières de la boîte.

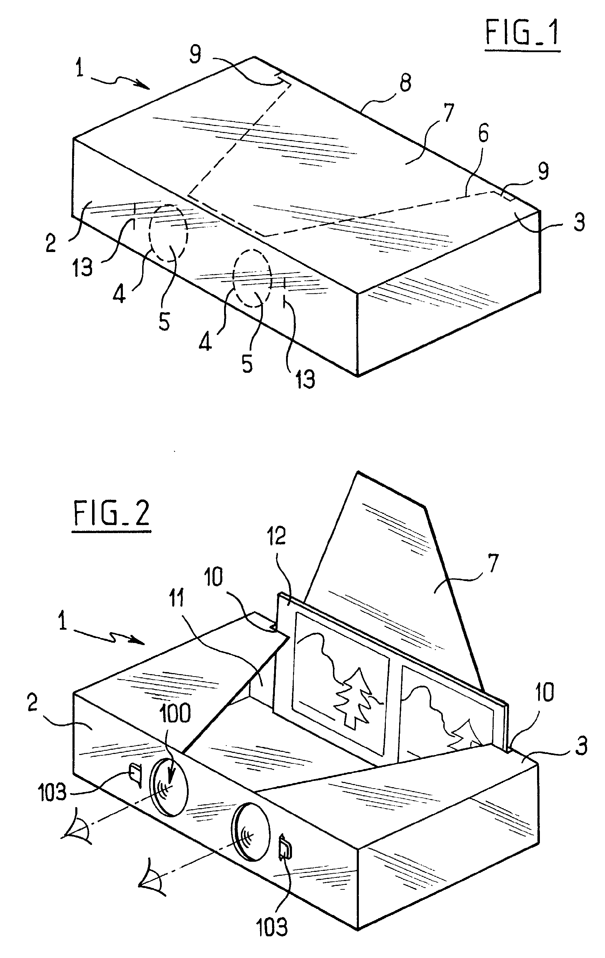

En référence à la figure 1 illustrant un premier mode de réalisation de l'invention, une boîte parallélépipédique 1, formée de manière connue en soi à partir d'un flan, comporte une paroi frontale 2 et une paroi supérieure 3 adjacente à la paroi frontale 2.

Selon l'invention, la paroi frontale 2 comporte des prédécoupes 4 illustrées en pointillés définissant des portions détachables 5 ici de forme sensiblement circulaire. Toujours selon l'invention, la paroi supérieure 3 comporte une prédécoupe 6 définissant un volet rabattable 7 dont la charnière est constituée par une arête 8 de la boîte 1 parallèle à la paroi frontale 2. Par ailleurs, des prédécoupes 9 de la paroi supérieure 3 s'étendant parallèlement à l'arête 8 au voisinage de celle-ci définissent, après détachement du volet 7, deux fentes 10 (mieux visibles sur la figure 2) s'étendant de part et d'autre du volet 7.

La boîte 1 est transformée en visionneuse en détachant les portions 5 de la paroi frontale, et en détachant le volet 7 et les fentes 10, ainsi que cela est illustrée à la figure 2. Les portions 5 détachées définissent des orifices de la paroi frontale 2 distants d'un écartement oculaire permettant la vision binoculaire vers l'intérieur de la boîte, tandis que le volet 7 rabattu permet d'une part un accès pour la lumière environnante à l'intérieur de la boîte, et d'autre part un accès à une paroi d'appui 11 pour une image double 12, la paroi d'appui 11 étant ici constituée par la paroi arrière de la boîte 1 en regard de la paroi frontale 2 qui se trouve, par construction de la boîte, à distance de ladite paroi frontale. Les fentes 10 organisent un système de glissière permettant le maintien fiable de l'image double 12 sur la paroi d'appui 11, en vue de l'observation de l'image double par vision binoculaire, avec l'effet bien connu des visionneuses stéréoscopiques.

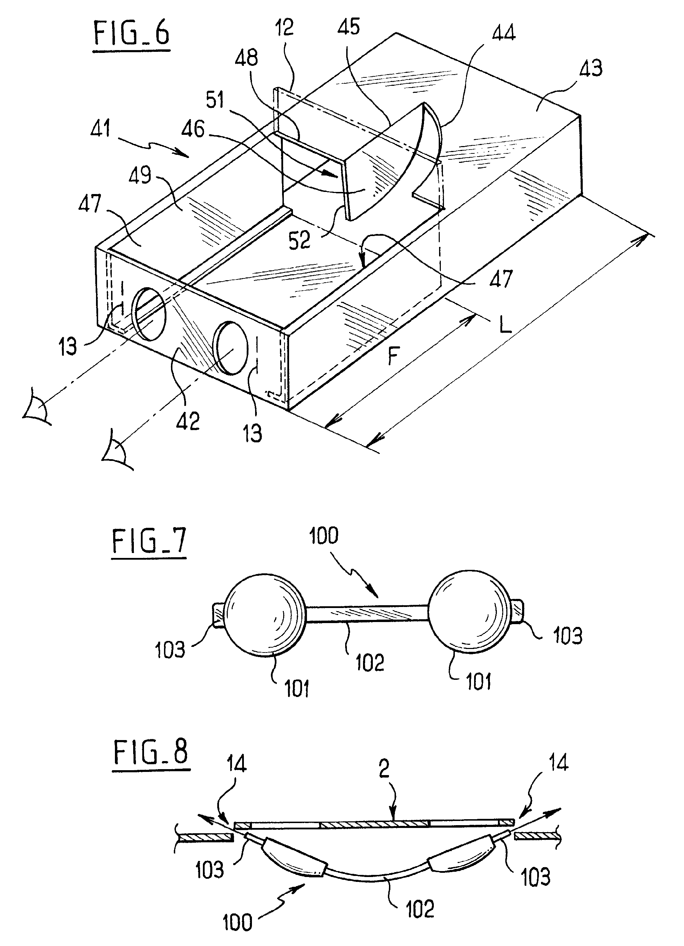

Une loupe binoculaire 100 est rapportée sur la paroi frontale 2. A cet effet, la paroi frontale 2 est pourvue de prédécoupes 13 parallèles, disposées de chaque côté des portions détachables 5. Ainsi que cela est visible à la figure 7, la loupe 100 comprend deux lentilles circulaires 101 reliées entre elles par un ligament flexible 102, chacune des lentilles 101 portant une patte saillante 103.

La figure 8 illustre la façon de mettre en place la loupe binoculaire 100 sur la paroi frontale de la boîte 1. Les prédécoupes 13 sont détachées, définissant deux fentes 14. Le ligament 102 de la loupe binoculaire 100 est alors fléchi de façon à introduire les pattes 103 dans les fentes 14. En reprenant sa forme de repos, le ligament empêche les pattes 103 de sortir des fentes 14, le maintien en place étant assuré par l'élasticité propre du ligament 102, de sorte que la loupe est solidement attachée à la paroi frontale 2.

En variante non représentée, le système de fentes 14 peut ne pas être utilisé. En veillant à réaliser les prédécoupes 4 de sorte que la distance entre les éléments détachables 5 soit légèrement inférieure à la distance entre les lentilles 101, on conçoit alors que la mise en place de la loupe binoculaire 100 exige une légère flexion du ligament 102 afin que les lentilles 101 entrent dans les orifices obtenus par détachement des éléments détachables 5. Cette légère flexion va induire un appui élastique des lentilles 101 contre les bords externes desdits orifices, cet appui contribuant au maintien de la loupe 100 sur la visionneuse. Les pattes 103 servent alors de butée anti-extraction.

La boîte 1 est ainsi facilement transformée en une visionneuse stéréoscopique, sans qu'il soit nécessaire de procéder à une opération de collage ou d'agrafage. Il est loisible à l'utilisateur de changer d'image double à volonté. La loupe binoculaire pourra être introduite dans la boîte au moment de son remplissage, ou emballée dans un sachet plastique collé à la boîte, de sorte que l'utilisateur n'aura plus qu'à l'installer selon la méthode décrite.

Selon une variante non représentée, on pourra imprimer directement une image double sur la paroi arrière 11 de la boîte, l'image double pouvant éventuellement déborder sur la face interne du volet 7. On pourra encore imprimer une image double sur la face externe du volet 7, une série de lignes de pliage réalisées sur le volet 7 permettant alors de rabattre la face externe du volet 7 à l'intérieur de la boîte contre la paroi arrière 11 de façon que cette image double se trouve en regard de la paroi frontale 2.

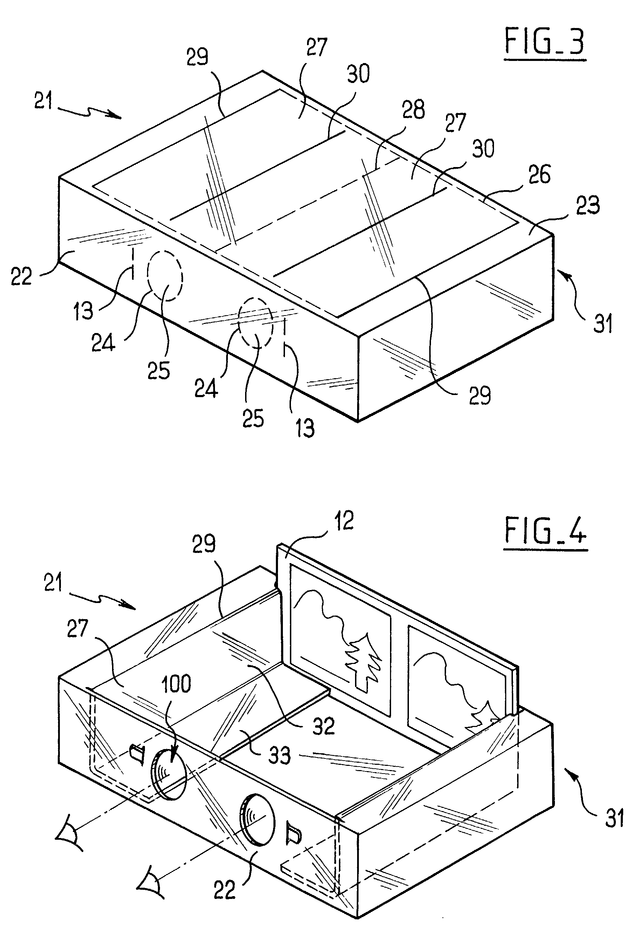

Selon un deuxième mode de réalisation de l'invention illustré à la figure 3, une boîte parallélépipédique 21 comporte une paroi frontale 22 et une paroi supérieure 23 adjacente à la paroi 21.

Selon l'invention, la paroi frontale 21 comporte des prédécoupes 24 définissant des portions détachables 25 là encore circulaires. Toujours selon l'invention, la paroi supérieure 23 comporte une prédécoupe 26 définissant deux volets rabattables 27 s'étendant entre la paroi frontale 22 et la paroi arrière de la boîte 31 (non visible ici) en regard de la paroi frontale 22. Les volets 27 sont séparés par une prédécoupe centrale 28 s'étendant perpendiculairement à la paroi frontale 22, et sont délimités par une ligne de pliage 29 s'étendant parallèlement à la prédécoupe 28. Des lignes de pliage 30 parallèles à la prédécoupe 28 définissent sur chaque volet 27 deux panneaux 32 et 33 comme illustré sur la figure 4.

Ainsi que cela est visible à la figure 4, la boîte 21 est transformée en visionneuse en détachant les portions 25 de la paroi frontale 22, et en détachant les volets 27. Les volets 27 sont rabattus de façon que le panneau 32 prenne une position quasi verticale et que le panneau 33 prenne une position horizontale en fond de boîte.

Les portions 25 détachées définissent des orifices de la paroi frontale 22 distants d'un écartement oculaire pour permettre une vision binoculaire vers l'intérieur de la boîte. Une loupe binoculaire 100 est rapportée sur la paroi frontale 22 de manière similaire à ce qui a déjà été décrit. A cet effet, la paroi frontale 22 est là encore pourvue de prédécoupes parallèles 13 de chaque côté des portions détachables 25.

Les volets 27 rabattus permettent d'une part l'accès pour la lumière environnante à l'intérieur de la boîte, et d'autre part l'accès à une paroi d'appui 31 pour une image double 12, la paroi d'appui 31 étant comme précédemment constituée de la paroi de la boîte 21 en regard de la paroi frontale 22. Les panneaux 32 organisent avec la paroi d'appui 31 un système de glissière apte à recevoir et permettant le maintien de l'image double 12 contre la paroi d'appui 31. Cette disposition présente en outre l'avantage de rigidifier la boîte ainsi découpée.

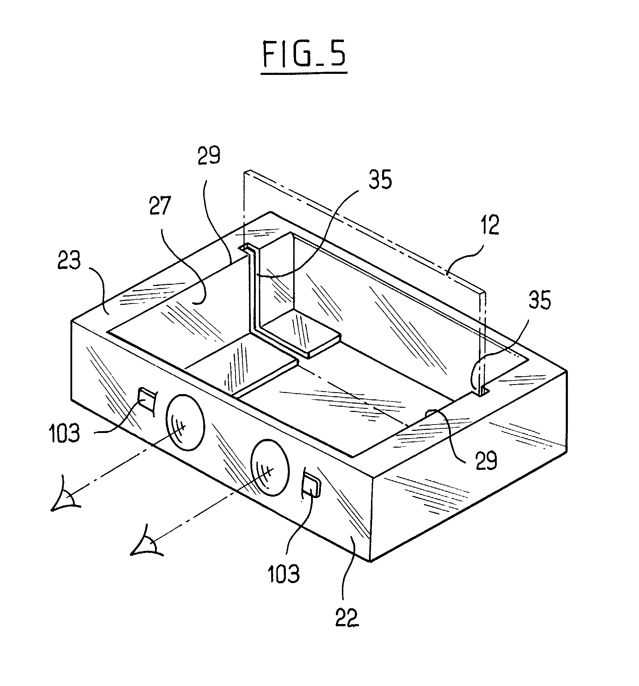

Selon une variante illustrée à la figure 5 sur laquelle les éléments communs avec ceux des figures 3 et 4 portent la même référence, on prévoit un système de glissière comprenant deux encoches 35 s'étendant perpendiculairement aux charnières 29 pour couper les volets 27 en deux parties et mordre légèrement au delà des charnières 29 sur la face supérieure 23. Ce système de glissière joue ici le rôle du moyen de support de l'image double 12, en plus de son rôle de guidage de ladite image double.

Selon un troisième mode de réalisation illustré à la figure 6, l'invention est adaptée à une boîte dont la distance entre la paroi frontale et la paroi arrière en regard de la paroi frontale est plus grande que la distance focale des lentilles de la loupe.

La boîte 41 illustrée ici transformée en visionneuse comprend une paroi frontale 42 présentant deux orifices pour permettre la vision binoculaire vers l'intérieur de la boîte. Les deux orifices sont obtenus comme dans les modes de réalisation précédents par détachement de portions de la paroi frontales définis par des prédécoupes.

La longueur L de la boîte 41 est ici notablement plus grande que la distance focale F de la loupe binoculaire, de sorte qu'il n'est pas envisageable de se servir de la paroi arrière de la boîte 41 comme d'un moyen de support pour une image double.

Selon l'invention, on prévoit alors deux volets 47 sur la paroi supérieure 43 de la boîte 41 similaires à ceux décrits en relation avec les figures 3 et 4, mais s'étendant non pas jusqu'à la paroi arrière de la boîte 41, mais uniquement jusqu'à une distance sensiblement égale à la distance focale F de la loupe binoculaire. Ces volets 47 sont rabattus le long de lignes de pliage 49 en étant comme auparavant obtenus à partir de prédécoupes réalisées sur la paroi supérieure 43. Les volets 47 sont représentés en position rabattue sur la figure 6.

Le détachement des deux volets 47 fait apparaître un bord libre 48 de la paroi supérieure 43 s'étendant parallèlement à la paroi frontale 42. Une autre prédécoupe 44 s'étendant jusqu'à ce bord 48, et rejoignant une ligne pliable 45 s'étendant perpendiculairement au bord 48, définit un élément détachable 46 que l'on voit ici rabattu vers l'intérieur de la boîte 41.

L'élément détachable 46 présente une portion de bord 52 sécante avec la partie du bord 48 restée intouchée lors du détachement de l'élément détachable 46. Le bord 48 et la portion de bord 52 de l'élément détachable 46 définissent un plan d'appui 51 en regard de la paroi frontale 42 pour une image double 12 esquissée en traits mixtes sur la figure 6. Le plan d'appui est sensiblement parallèle à la paroi frontale 42 et est situé à une distance F sensiblement égale à la distance focale F de la loupe binoculaire utilisée. Les volets 47 permettent un accès pour la lumière environnante à l'intérieur de la boîte 41 en vue d'éclairer l'image double 12, et organisent comme précédemment un système de glissière pour le guidage de l'image double 12 sur le plan d'appui ainsi défini.

Une loupe binoculaire 100 est en outre rapportée sur la paroi frontale 42 de manière similaire à ce qui a déjà été décrit. A cet effet, la paroi frontale 42 est pourvue de prédécoupes parallèles 13 pour la mise en place de la loupe binoculaire 100.

L'invention n'est pas limitée aux modes particuliers de réalisation qui viennent d'être décrits, mais bien au contraire entend couvrir toute variante qui entre dans le cadre de l'invention tel que défini par les revendications.

Bien que l'on ait décrit ici des modes de réalisation de l'invention pour lesquels l'image double est rapportée, on peut envisager, pour les boîtes présentant une paroi d'appui en guise de moyen de support, qu'une image double soit imprimée directement sur la paroi d'appui.

Enfin, bien que l'on ait décrit ici des boîtes dont les portions détachables de la paroi adjacente à la paroi frontale servaient à la fois d'accès au moyen de support et d'accès à la lumière environnante à l'intérieur de la boîte, on peut envisager de séparer ces deux accès, lesdits deux accès pouvant être réalisées sur des parois différentes.

## Revendications

1. Boîte transformable ayant une paroi frontale (2 ;22 ;42) et des parois adjacentes à la paroi frontale (3 ;23 ;43), certaines au moins de ces parois comportant des prédécoupes délimitant des éléments de paroi partiellement ou totalement détachables, **caractérisée en ce que** la paroi frontale (2 ;22 ;42) comporte au moins un élément détachable (5 ;25) permettant, après détachement, une vision binoculaire à l'intérieur de la boîte, et **en ce qu'**au moins l'une des parois adjacentes (3 ;23 ;43) à la paroi frontale comporte au moins un élément détachable (7 ;27 ;47) permettant, après détachement, un accès pour la lumière environnante à l'intérieur de la boîte, un moyen de support (11 ;31 ;35 ;48,49) étant en outre agencé à l'intérieur de la boîte à distance de la paroi frontale (2 ;22 ;42) pour supporter une image double en regard de la paroi frontale (2 ;22 ;42) à distance de celle-ci.

2. Boîte transformable selon la revendication 1, **caractérisée en ce que** l'élément détachable (5 ;25) de la paroi frontale comporte deux portions distantes entre elles d'un écartement oculaire.

3. Boîte transformable selon la revendication 1 ou la revendication 2, **caractérisée en ce que** la paroi frontale comporte deux prédécoupes (13) réalisées de part et d'autre de l'élément détachable (5 ;25) de la paroi frontale (2 ;22 ;42) , ces prédécoupes (13) formant, après détachement, des fentes pour la mise en place d'une optique binoculaire.

4. Boîte transformable selon l'une des revendications 1 à 3, **caractérisée en ce qu'**une paroi adjacente (3) à la paroi frontale (2) comporte un élément détachable (7) ayant une ligne de pliage (8) s'étendant le long d'une paroi arrière (11) de la boîte en regard de la paroi frontale (2), la paroi arrière (11) constituant, après détachement, le moyen de support de l'image double.

5. Boîte transformable selon la revendication 4, **caractérisée en ce que** la paroi (3) adjacente à la paroi frontale (2) comprend en outre deux prédécoupes (9) s'étendant de part et d'autre de l'élément détachable (7) le long de la paroi arrière (11) au voisinage de celle-ci, ces prédécoupes (9) constituant, après détachement, un système de glissière (10) apte à recevoir l'image double.

6. Boîte transformable selon l'une des revendications 1 à 3, **caractérisée en ce qu'**une paroi (23) adjacente à la paroi frontale (22) comporte un élément détachable (27) délimité par une prédécoupe (26) dont une portion arrière s'étend le long d'une paroi arrière de la boîte (31) en regard de la paroi frontale (22), la paroi arrière (31) constituant, après détachement de la prédécoupe (26), le moyen de support de l'image double.

7. Boîte transformable selon la revendication 6, **caractérisée en ce que** l'élément détachable est composé de deux volets (27,27) s'étendant jusqu'à la paroi arrière (31) et ayant chacun une ligne de pliage (29) s'étendant perpendiculairement à la paroi arrière (31), les volets (27,27) en position rabattue dans la boîte et la face arrière (31) définissant, après détachement, un système de glissière apte à recevoir l'image double.

8. Boîte transformable selon l'une des revendications 1 à 3, **caractérisé en ce qu'**une paroi (23) adjacente à la paroi frontale (22) comporte un élément détachable composé de deux volets (27,27) ayant chacun une ligne de pliage (29) s'étendant perpendiculairement à la paroi frontale (22), des encoches (35) s'étendant parallèlement à la paroi frontale à cheval sur les lignes de pliage (29) de chacun des volets (27,27) pour constituer, après détachement, le moyen de support de l'image double lorsque les volets (27,27) sont rabattus.

9. Boîte transformable selon l'une des revendications 1 à 3, **caractérisée en ce qu'**une paroi (43) adjacente à la paroi frontale (42) comporte un premier élément détachable (47) délimité par une prédécoupe dont une portion arrière s'étend parallèlement à la paroi frontale pour définir un bord (48) d'appui après détachement du premier élément détachable, la même paroi adjacente (43) comportant en outre un second élément détachable (46) s'étendant jusqu'au bord d'appui (48) et ayant une ligne de pliage (45) perpendiculaire à ce bord d'appui (48), le bord d'appui (48) et le second élément (46) en position rabattue autour de la ligne de pliage (45) constituant, après détachement, le moyen de support (51) de l'image double.

10. Boîte transformable selon la revendication 9, **caractérisée en ce que** le premier élément détachable est composé de deux volets (47 ,47) s'étendant jusqu'au moyen de support (51) et ayant chacun une ligne de pliage (49) s'étendant perpendiculairement au bord libre (48), les volets (47 ,47) en position rabattue dans la boîte et le bord libre (48) définissant, après détachement, un système de glissière apte à recevoir l'image double.
